(19) **Europäisches Patentamt / European Patent Office / Office européen des brevets**

(11) **EP 3 715 923 B1**

(12) **EUROPEAN PATENT SPECIFICATION**

(45) Date of publication and mention
of the grant of the patent:
**13.09.2023 Bulletin 2023/37**

(21) Application number: **18918992.1**

(22) Date of filing: **29.08.2018**

(51) International Patent Classification (IPC):
*G02B 6/02* (2006.01)        *G02B 6/036* (2006.01)
*C03B 37/018* (2006.01)       *C03B 37/027* (2006.01)

(52) Cooperative Patent Classification (CPC):
**G02B 6/02019; C03B 37/01807; C03B 37/01838;**
**G02B 6/03611; G02B 6/03627; G02B 6/03694;**
C03B 2201/12; C03B 2201/31; C03B 2201/50;
C03B 2203/24

(86) International application number:
**PCT/CN2018/102809**

(87) International publication number:
**WO 2019/218525 (21.11.2019 Gazette 2019/47)**

(54) **SINGLE-MODE OPTICAL FIBER WITH ULTRALOW LOSS AND LARGE EFFECTIVE AREA AND MANUFACTURING METHOD THEREFOR**

SINGLEMODE-GLASFASER MIT ULTRAGERINGEM VERLUST UND GROSSER EFFEKTIVER FLÄCHE UND HERSTELLUNGSVERFAHREN DAFÜR

FIBRE OPTIQUE MONOMODE À TRÈS FAIBLE PERTE ET À GRANDE SURFACE UTILE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.05.2018 CN 201810453514**

(43) Date of publication of application:
**30.09.2020 Bulletin 2020/40**

(73) Proprietor: **FIBERHOME TELECOMMUNICATION TECHNOLOGIES CO., LTD.**
**Hubei 430000 (CN)**

(72) Inventors:
• **YU, Huang**
  **Wuhan, Hubei 430000 (CN)**
• **ZHAO, Zisen**
  **Wuhan, Hubei 430000 (CN)**
• **LUO, Cheng**
  **Wuhan, Hubei 430000 (CN)**
• **ZHANG, Yichi**
  **Wuhan, Hubei 430000 (CN)**

(74) Representative: **Oberdorfer, Jürgen**
**Kuhnen & Wacker**
**Prinz-Ludwig-Str. 40A**
**85354 Freising (DE)**

(56) References cited:
CN-A- 1 438 501        CN-A- 104 459 876
CN-A- 106 125 192      CN-A- 107 179 579
CN-A- 107 678 087      CN-A- 108 469 648
JP-A- H11 167 038      US-A1- 2008 063 348
US-A1- 2015 226 914    US-A1- 2016 304 392

• **HIRANO MASAAKI ET AL: "Ultra-Low Loss Fiber for 100G-Based Trans-Oceanic Transmission", 2014 ASIA COMMUNICATIONS AND PHOTONICS CONFERENCE (ACP), OSA, 11 November 2014 (2014-11-11), pages 1-3, XP033536369, [retrieved on 2019-04-10]**

**Description**

**Field of the Invention**

The invention relates to a single-mode optical fiber with ultralow loss and a large effective area and a manufacturing method thereof.

**Background of the Invention**

With the advent of coherent transmission technology, in the field of optical fiber transmission, some important indexes that originally limited long-distance, large-capacity, and high-rate transmission are no longer the main limiting factors. The index of dispersion and polarization mode dispersion will be further relaxed in future transmission systems. However, the increase in transmission capacity and distance requires higher fiber input power and lower fiber loss to meet the demand for distinguishable signal-to-noise ratio. With the increase of the power of the optical fiber, non-linear effects such as phase modulation, cross-phase modulation, and four-wave mixing are inevitably generated in the core layer of the optical fiber, especially the stimulated Brillouin scattering effect with a lower threshold. The occurrence of these effects makes the system generate signal crosstalk, or the signal-to-noise ratio of the system is reduced, so that the transmission capacity cannot be continuously improved.

The reason for introducing an optical fiber with low-loss and a large effective area is to systematically improve the optical signal-to-noise ratio and reduce the effects of the non-linear effects. When a high-power density system is used, the non-linear coefficient is a parameter used for the performance of the system due to non-linear effects, which is defined as $n_2/A_{eff}$. Among them, $n_2$ is the nonlinear refractive index of the transmission optical fiber, and $A_{eff}$ is the effective area of the transmission optical fiber. It can be seen from the formula that increasing the effective area of the transmission optical fiber can reduce nonlinear effects in the optical fiber.

In the current refractive index profile design with the large effective area, the large effective area is often obtained by increasing the diameter of the optical core layer for transmitting optical signals. This kind of scheme has certain design difficulties. On the one hand, the core layer of the optical fiber and the cladding layer near it mainly determine the basic performance of the optical fiber, and occupy a large proportion of the cost of optical fiber manufacturing. If the designed radial dimension is too large, it will inevitably increase the manufacturing cost of the optical fiber and raise the price of the optical fiber. On the other hand, compared with the ordinary single-mode fiber, the increase of the effective area of the fiber will lead to the deterioration of some other parameters of the optical fiber, for example, the cut-off wavelength will become larger; in addition, if the refractive index profile of the optical fiber is improperly designed, it will also lead to the deterioration of parameters such as bending performance and dispersion.

In the optical fiber material, the attenuation of the optical fiber mainly comes from the inherent loss of the optical fiber and the additional loss caused by the conditions of use after the optical fiber is made. The former comprises scattering loss, absorption loss and loss caused by imperfect optical fiber structure. The additional losses comprise microbending losses and splice losses. In general, the lower the concentration of the doping material, the smaller the loss caused by Rayleigh scattering.

At present, using pure silicon core fiber can reduce the scattering loss, but the reduction of the scattering loss cannot explain the overall transmission of the optical fiber. When the scattering losses have been reduced, some transmission losses have not decreased but increased. The root cause is mainly the mismatch of the thermophysical properties of the optical fiber core layer material and cladding layer material, especially the mismatch of high temperature viscosity and thermal expansion coefficient. Therefore, in the actual drawing process, the mismatch of the high-temperature viscosity of the optical fiber material components leads to incomplete optical fiber structure, which seriously affects the reduction of the optical fiber transmission loss, and makes it difficult to manufacture low-loss optical fibers. On the other hand, the mismatch of the high temperature viscosity is due to different specific temperatures of the core layer material and the cladding layer material such as the glass softening temperature. During the drawing process, the different specific temperatures of the core layer and the cladding layer will cause a large residual stress in the optical fiber, which not only destroys the designed waveguide structure, but also affects the strength and service life of the optical fiber.

CN104459876A relates to a single-mode optical fiber with ultralow attenuation and a large effective area. The single-mode optical fiber comprises a core layer and a wrapping layer and is characterized in that the core layer comprises a sinking core layer body and an outer core layer body from center to outside; the wrapping layer comprises an inner wrapping layer body, a sinking inner wrapping layer body, an auxiliary outer wrapping layer body and an outer wrapping layer body from inside to outside; the radius $R_1$ of the sinking core layer body ranges from 1.5 µm to 4 µm, and the relative refractivity ranges from -0.10% to 0.02%; the radius $R_2$ of the outer core layer body ranges from 4.5 µm to 6.5 µm, and the relative refractivity ranges from -0.08% to 0.10%; the radius $R_3$ of the inner wrapping layer body ranges from 9 µm to 15 µm, and the relative refractivity ranges from -0.25% to -0.1%; the radius $R_4$ of the sinking inner wrapping layer body ranges from 12 µm to 20 µm, and the relative refractivity ranges from -0.6% to -0.25%; the radius $R_5$ of the

auxiliary inner wrapping layer body ranges from 35 $\mu$m to 50 $\mu$m, and the relative refractivity ranges from -0.45% to -0.15%; the outer wrapping layer body is a pure silicon dioxide glass layer. The single-mode optical fiber has the large effective area and good bending loss and chromatic dispersion performance, the cabling cutoff wavelength is smaller than 1530 nm, and the production cost is low.

CN107179579A discloses a low-loss optical fiber and a manufacturing method therefor. The optical fiber sequentially comprises a core layer and an adjacent cladding from the inside to the outside. The core layer does not contain germanium, and the content of fluorine in the core layer is less than or equal to 0.1wt%. The refractive index of the core layer is less than or equal to 0.05%, and the content of fluorine in the adjacent cladding is 1-2wt%. The refractive index of the adjacent cladding is less than or equal to 0.28%. The core layer and the adjacent cladding are doped with alkali metal halide. According to the invention, the attenuation caused by hydroxy radicals at the wavelength of 1383nm can be reduced in a process of rod shrinkage under the condition of meeting the requirements of the refractive index design of the core and cladding through adding the alkali metal halide. Meanwhile, the matching of the viscosity of the core layer and the viscosity of the cladding can be achieved through the optimization of the doping concentration of germanium, fluorine and potassium ions, thereby effectively reducing the fiber attenuation caused by the concentration of the stress of a fiber core in a wire drawing process.

**Summary of the Invention**

In view of the defects existing in the prior art, an object of the present invention is to provide a single-mode optical fiber with ultralow loss and a large effective area and a manufacturing method thereof, which can reduce the attenuation coefficient and increase the effective area and bending resistance.

In order to achieve the above object, the present invention adopts a single-mode optical fiber with ultralow loss and a large effective area according to claims 1 and 7.

On the basis of the above technical solution, a content of alkali metal ions in the core layer is 5 to 1000ppm.

On the basis of the above technical solution, the alkali metal oxide is one or more of lithium oxide, sodium oxide, potassium oxide, rubidium oxide, cesium oxide, and francium oxide.

On the basis of the above technical solution, an effective area of the single-mode optical fiber at a wavelength of 1550nm is 130 or 133 $\mu$m$^2$.

On the basis of the above technical solution, when the single-mode optical fiber is wound for one turn at a bending radius of 10 mm, a macrobending loss at a wavelength of 1550nm is equal to 0.36 or 0.38 dB/km.

On the basis of the above technical solution, a mode field diameter of the single-mode optical fiber at a wavelength of 1550nm is 12.8 or 13 $\mu$m.

The present invention further provides a method for manufacturing a single-mode optical fiber with ultralow loss and a large effective area according to any one of the above, comprising the following steps: using a plasma chemical vapor deposition method to deposit and manufacture an optical fiber preform on a quartz reaction tube, using $SiCl_4$, $GeCl_4$, and $C_2F_6$ as raw materials for the optical fiber preform, preparing a designed profile of the optical fiber preform through changing the gas flow rate and ratio, as well as the moving speed of the reaction zone and the number of deposition during the production process, then adding a certain concentration of the alkali metal oxide during the preform formation process, at the same time, adding oxygen for reaction to remove water, finally melting the preform at a high temperature to obtain an alkali metal-doped optical fiber preform, and then subjecting the alkali metal-doped optical fiber preform to a drawing process.

On the basis of the above technical solution, the temperature for drawing the optical fiber preform is 1800 to 2000°C.

Compared with the prior art, the present invention has the advantages as follows:

(1) The single-mode optical fiber provided by the present invention has the mode field diameter of 12.8 or 13 $\mu$m. at the working wavelength of 1550nm, which can not only reduce the power density of light, but also increase the effective area of the optical fiber; the effective area of the optical fiber is 130 or 133 $\mu$m$^2$.

(2) According to the single-mode fiber provided by the present invention, the inner core layer has the radius $R_1$ of 2.7 or 3 $\mu$m, and the outer core layer has the radius $R_2$ of 5.7 or 6 $\mu$m the diameter of the core layer is not very large, while the cut-off wavelength is 1510 or 1507 nm.

(3) The present invention can reduce the macrobending loss under the bending state of the optical fiber, and has superior bending resistance, when the single-mode optical fiber has the bending radius of 10 mm * 1 turn, the macrobending loss at the working wavelength of 1550nm is 0.36 or 0.38 dB/km.

(4) When the single-mode optical fibers are spliced to each other, a single-point splice loss is less than 0.05 dB; in addition, taking the single-mode optical fiber with the diameter of 125μm as an example for testing, when the working wavelength is 1550nm, its attenuation coefficient is 0.158 or 0.155 dB/km, which has the ultralow loss characteristic.

In short, the single-mode optical fiber provided by the present invention, in the case of satisfying the waveguide design, through limiting the relative refractive index and size ratio of the core layer and the cladding layer, makes the single-mode optical fiber have characteristics of large effective area; at the same time, in case of satisfying the relative refractive index in this waveguide design, through limiting the specific composition of the relative refractive index (contributing refractive index of germanium and fluorine), and doping the alkali metal, the stress between the core layer and the cladding layer can be reduced and the core-clad viscosity can be optimized, thereby achieving the matching of the core-clad viscosity, realizing the ultralow loss characteristics of the optical fiber, and finally making the single-mode optical fiber have the characteristics of ultralow loss and large effective area, which can not only reduce the non-linear effects in the optical fiber, improve the optical signal-to-noise ratio, increase the transmission capacity, but also have better application prospects and social benefits due to the diameter of the optical fiber is not very large and the cut-off wavelength is 1510 or 1507 nm.

**Description of the Drawings**

Fig. 1 shows a schematic structural cross-sectional view of a bare optical fiber of the single-mode fiber in the embodiment of the present invention;

Fig. 2 shows a schematic diagram of a refractive index in the embodiment of the present invention.

In the figures: 1-inner core layer; 2-outer core layer; 3-depressed cladding layer; 4-outer cladding layer; n2-relative refractive index of outer core layer; $R_1$-radius of inner core layer; $R_2$-radius of outer core layer; $R_3$-radius of depressed cladding layer; $R_4$-radius of outer cladding layer; $\Delta_1$-relative refractive index difference of inner core layer; $\Delta_2$-relative refractive index difference of outer core layer; $\Delta_3$-relative refractive index difference of depressed cladding layer.

**Detailed Description of the Embodiments**

The present invention is further described in detail below with reference to the accompanying drawings and embodiments.

The technical terms related to the present invention are defined as follows:

Deposition: the process of producing a doped quartz glass by chemical reaction of optical fiber raw materials under a certain environment.

Melting: the process of gradually burning the deposited hollow glass tube into a solid glass rod under a certain heat source.

Tube: high-purity quartz glass tubes that meets a certain cross-sectional area and size uniformity.

Base tube: high-purity quartz glass tubes for deposition.

Refractive index profile (RIP): the relationship carves between the refractive index of an optical fiber or optical fiber perform (comprising optical fiber core rob) and its radius.

$$\Delta\% = \frac{n_i^2 - n_0^2}{2\,n_i^2} \times 100\%$$

Relative refractive index ($\Delta\%$): , wherein $n_i$ is the refractive index of optical fiber material in layer i, i is a positive integer, and $n_0$ is the refractive index of pure quartz glass.

Effective area:

$$A_{\text{eff}} = 2\pi \times \frac{\left(\int\limits_0^\infty E^2 \, \text{rdr}\right)^2}{\int\limits_0^\infty E^4 \, \text{rdr}}$$

wherein E is a transverse component of an electric field related to propagation, and r is the radius of the optical fiber.

Mode field diameter:

$$MFD = 2\left[2 \frac{\int\limits_0^\infty rE^2(r) \, dr}{\int\limits_0^\infty r\left[\frac{dE(r)}{dr}\right]^2 dr}\right]^{1/2}$$

wherein E is the transverse component of the electric field related to propagation, r is the radius of the optical fiber.

PCVD: Plasma Chemical Vapor Deposition.

MCVD: Modified Chemical Vapor Deposition.

OVD: Outer Vapor Deposition.

VAD: Vapour Axial Deposition.

Embodiment 1

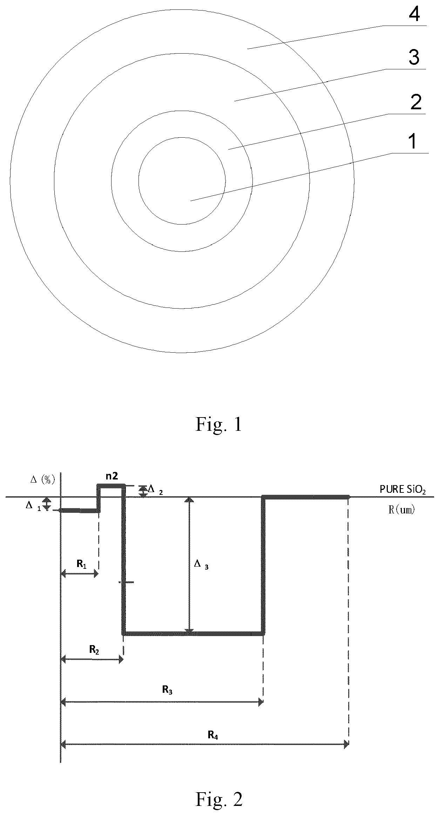

As shown in Fig. 1 and Fig. 2, the embodiment of the present invention provides a single-mode optical fiber with ultralow loss and a large effective area, wherein the bare optical fiber of the single-mode optical fiber comprises a core layer and a cladding layer in sequence from inside to outside. The core layer comprises an inner core layer 1 and an outer core layer 2 which are arranged in sequence from inside to outside. The radius $R_1$ of the inner core layer 1 is 2.7 or 3 $\mu$m, and the relative refractive index of the inner core layer 1 is -0.02% or -0.01%. The radius $R_2$ of the outer core layer 2 is 5.7 or 6 $\mu$m, and the relative refractive index of the outer core layer 2 is -0.006% or -0.008%.

The core layer is hardly doped with germanium and is a silica glass layer doped with fluorine and an alkali metal oxide. The cladding layer comprises a depressed cladding layer 3 and an outer cladding layer 4 which are arranged in sequence from inside to outside. The radius $R_3$ of the depressed cladding layer 3 is 47 or 49 $\mu$m, and the relative refractive index of the depressed cladding layer 3 is -0.235% or -0.24%.

The radius $R_4$ of the outer cladding layer 4 is 62.5$\mu$m, and the outer cladding layer 4 is a pure silica glass layer.

The relative refractive index of the inner core layer 1 is $n_1$.

The relative refractive index of the outer core layer 2 is $n_2$.

The relative refractive index of the depressed cladding layer 3 is $n_3$.

The relative refractive index of the outer cladding layer 4 is $n_4$.

Based on the relative refractive index $n_4$ of the outer cladding layer 4, there is a relative refractive index difference between each layer and the outer cladding layer.

The calculation formula of the relative refractive index difference is as follows:

$$\Delta = (n - n_4)/(n + n_4) * 100\%;$$

wherein n is the refractive index of the corresponding layer compared with the refractive index of the outer cladding layer 4.

When calculating the relative refractive index difference between the inner core layer 1 and the outer cladding layer 4, $\Delta$ in the above formula is the relative refractive index difference $\Delta_1$ of the inner core layer 1, and n is the relative refractive index $n_1$ of the inner core layer 1.

When calculating the relative refractive index difference between the outer core layer 2 and the outer cladding layer 4, Δ in the above formula is the relative refractive index difference $\Delta_2$ of the outer core layer 2, and n is the relative refractive index $n_2$ of the outer core layer 2.

When calculating the relative refractive index difference between the depressed cladding layer 3 and the outer cladding layer 4, Δ in the above formula is the relative refractive index difference $\Delta_3$ of the depressed cladding layer 3, and n is the relative refractive index $n_3$ of the depressed cladding layer 3.

In the single-mode fiber, the core layer is hardly doped with germanium. It should be understood that a content of germanium in the core layer is controlled, so that the contributing index of germanium in the outer core layer to the outer core layer is 0.04% or 0.03%, and the contributing index of germanium in the inner layer to the inner core layer is 0.02% or 0.06%.

In the single-mode optical fiber, the content of alkali metal ions in the core layer is 5 to 1000ppm.

In the single-mode optical fiber, the alkali metal oxide is one or more of lithium oxide, sodium oxide, potassium oxide, rubidium oxide, cesium oxide, and francium oxide.

An effective area of the single-mode optical fiber at the wavelength of 1550nm is 130 or 133 $\mu m^2$.

An attenuation coefficient of the single-mode optical fiber at the wavelength of 1550nm is 0.158 or 0.155 dB/km.

When the single-mode optical fiber is wound for one turn at the bending radius of 10 mm, a macrobending loss at the wavelength of 1550nm is equal to 0.36 or 0.38 dB/km.

A mode field diameter of the single-mode optical fiber at the wavelength of 1550nm is 12.8 or 13 $\mu m$.

Embodiment 2

This embodiment provides a method for manufacturing the above-mentioned single-mode optical fiber with ultralow loss and a large effective area, comprises the following steps: using a plasma chemical vapor deposition method to deposit and manufacture an optical fiber preform on a quartz reaction tube, using $SiCl_4$, $GeCl_4$, and $C_2F_6$ as raw materials for the optical fiber preform, preparing a designed profile of the optical fiber preform through changing the gas flow rate and ratio, as well as the moving speed of the reaction zone and the number of deposition during the production process, then adding a certain concentration of the alkali metal oxide during the perform formation process, at the same time, adding oxygen for reaction to remove water, finally melting the preform at a high temperature to obtain an alkali metal-doped optical fiber preform, and then subjecting the alkali metal-doped optical fiber preform to a drawing process.

The temperature for drawing the optical fiber preform is 1800 to 2000°C, and the outer cladding layer of the optical fiber preform is a pure silica quartz glass layer prepared by OVD, VAD, and MCVD.

Under the premise of satisfying the design of the core-clad refractive index, through adding the alkali metal oxide in the melting process, the present invention can reduce the attenuation caused by hydroxyl at the wavelength of 1383nm; meanwhile, through optimizing the doping concentration of fluorine and alkali metal ions, the viscosity of the core layer and the cladding layer can be matched, thereby effectively reducing the increase in optical fiber attenuation caused by the core stress concentration during the drawing process.

In the present invention, a certain concentration of the alkali metal oxide is doped into the optical fiber, so that the reaction product with oxygen can be dehydrated to reduce attenuation at the wavelength of 1383nm. At the same time, the concentration of the alkali metal ion in the core layer is optimized, the core stress is reduced, so that the core-clad viscosity can be matched.

Embodiments 3 to 7

In the present invention, the PCVD deposition method is adopted, which can effectively control the refractive index distribution of each layer. The following is explained through five specific embodiments of Embodiments 3-7 (Embodiments 3-5 are not part of the present invention).

Table 1. Refractive Index Profile and Doped Material Content of Single-mode Optical Fiber

| Embodiment Number | Inner Core Layer 1 | | | | Outer Core Layer 2 | | | | Depressed Cladding Layer | | Outer Cladding Layer |
|---|---|---|---|---|---|---|---|---|---|---|---|
| | Radius $R_1$ ($\mu$m) | Relative Refractive Index m (%) | Contributing Refractive Index of Germanium (%) | Contributing Refractive Index of Fluorine (%) | Radius $R_2$ ($\mu$m) | Relative Refractive Index n2(%) | Contributing Refractive Index of Germanium (%) | Contributing Refractive Index of Fluorine (%) | Radius $R_3$($\mu$m) | Relative Refractive Index $n_3$(%) | Radius $R_4$($\mu$m) |
| 3 | 1.5 | -0.1 | 0.08 | -0.18 | 5 | 0 | 0.05 | -0.05 | 40 | -0.22 | 62.5 |
| 4 | 2 | -0.08 | 0.06 | -0.14 | 5.3 | -0.002 | 0.05 | -0.052 | 43 | -0.225 | 62.5 |
| 5 | 2.5 | -0.05 | 0.04 | -0.09 | 5.5 | -0.004 | 0.04 | -0.044 | 45 | -0.23 | 62.5 |
| 6 | 2.7 | -0.02 | 0.02 | -0.04 | 5.7 | -0.006 | 0.04 | -0.046 | 47 | -0.235 | 62.5 |
| 7 | 3 | -0.01 | 0.06 | -0.07 | 6 | -0.008 | 0.03 | -0.038 | 49 | -0.24 | 62.5 |

Table 2. Main Performance Parameters of Single-mode Optical Fiber

| Embodiment Number | Mode Field Diameter (μm) (working wavelength 1550nm) | Fiber Cut-off Wavelength (nm) | Effective Area (μm²) | Attenuation Coefficient(dB/k m) (working wavelength 1550nm) | MacrobendingLoss(dB/km) (bending radius 10mm per turn, working wavelength 1550nm) |
|---|---|---|---|---|---|
| 3 | 12.1 | 1450 | 122 | 0.165 | 0.3 |
| 4 | 12.3 | 1468 | 125 | 0.163 | 0.32 |
| 5 | 12.6 | 1476 | 128 | 0.161 | 0.34 |
| 6 | 12.8 | 1510 | 130 | 0.158 | 0.36 |
| 7 | 13 | 1507 | 133 | 0.155 | 0.38 |

As shown in Table 2 above, the single-mode optical fiber provided by the present invention has a mode field diameter of 12.8 or 13 μm at the working wavelength of 1550nm, which can not only reduce the power density of optical, but also increase the effective area of the optical fiber. The effective area is 130 or 133 μm².

The single-mode optical fiber provided by the present invention, the inner core layer 1 has the radius $R_1$ of 2.7 or 3 μm, and the outer core layer 2 has the radius $R_2$ of 5.7 or 6 μm. The diameter of the core layer is not very large, while the cut-off wavelength is 1510 or 1507 nm.

The present invention can reduce the macrobending loss of the optical fiber in the bending state, and has excellent bending resistance performance. In case of a bending radius of 10mm * 1 turn, the macrobending loss of the single-mode optical fiber at the working wavelength of 1550nm is 0.36 or 0.38 dB/km.

When the single-mode fibers are spliced to each other, the single-point splice loss is less than 0.05 dB. In addition, taking the single-mode optical fiber with the diameter of 125μm as an example for testing, when the working wavelength is 1550nm, its attenuation coefficient is 0.158 or 0.155 dB/km, which has the ultralow loss characteristic.

A comparative embodiment, not being part of the claimed invention, is disclosed in CN106125192A.

In this comparative embodiment, the attenuation coefficient of the optical fiber at 1550nm is less than or equal to 0.165dB/km, and the mode field area is greater than or equal to 110μm². Relative to this comparative embodiment, the present invention more specifically provides the optical fiber refractive index profile to meet the waveguide requirements of the single-mode optical fiber with ultralow loss and large effective area. Meanwhile, the doping content of germanium, fluorine, and alkali metals and the size ratio of the core layer and the cladding layer are specifically limited. While ensuring the ultralow attenuation performance, the effective area is further improved, so that the attenuation coefficient of the single-mode optical fiber provided by the present invention at 1550nm is 0.158 or 0.155 dB/km, and the effective area is 130 or 133 μm².

In conclusion, the single-mode optical fiber provided by the present invention, in the case of satisfying the waveguide design, through limiting the relative refractive index and size ratio of the core layer and the cladding layer, makes the single-mode optical fiber have characteristic of large effective area. At the same time, in case of satisfying the relative refractive index in this waveguide design, through limiting the specific composition of the relative refractive index (contributing refractive index of germanium and fluorine) and doping the alkali metal, the stress between the core layer and the cladding layer can be reduced and the core-clad viscosity can be optimized, thereby achieving the matching of the core-clad viscosity, realizing the ultralow loss characteristic of the optical fiber, and finally making the single-mode optical fiber have the characteristics of ultralow loss and large effective area, which can not only reduce the non-linear effects in the optical fiber, improve the optical signal-to-noise ratio, increase the transmission capacity, but also has better application prospects and social benefits due to the diameter of the optical fiber is not very large, and the cut-off wavelength is 1510 or 1507 nm.

Claims

1. A single-mode optical fiber with ultralow loss and a large effective area, the bare optical fiber of the single-mode optical fiber comprises a core layer and a cladding layer in sequence from inside to outside, wherein

the core layer comprises an inner core layer (1) and an outer core layer (2) which are arranged in sequence from inside to outside; the radius $R_1$ of the inner core layer (1) is 2.7μm, and the relative refractive index $n_1$ of

the inner core layer (1) is -0.02%; the radius $R_2$ of the outer core layer (2) is 5.7μm, and the relative refractive index $n_2$ of the outer core layer (2) is -0.006%; the core layer is hardly doped with germanium, and is a silica glass layer doped with fluorine and an alkali metal oxide;
the cladding layer comprises a depressed cladding layer (3) and an outer cladding layer (4) which are arranged in sequence from inside to outside; the radius $R_3$ of the depressed cladding layer (3) is 47μm, the relative refractive index $n_3$ of the depressed cladding layer (3) is -0.235%;
the radius $R_4$ of the outer cladding layer (4) is 62.5μm, and the outer cladding layer (4) is a pure silica glass layer;
the contributing refractive index of germanium in the inner core layer (1) to the inner core layer (1) is 0.02%, and the contributing refractive index of fluorine in the inner core layer (1) to the inner core layer (1) is -0.04%;
the contributing refractive index of germanium in the outer core layer (2) to the outer core layer (2) is 0.04%, and the contributing refractive index of fluorine in the outer core layer (2) to the outer core layer (2) is -0.046%;
an attenuation coefficient of the single-mode optical fiber at a wavelength of 1550nm is 0.158dB/km.

2. The single-mode optical fiber with ultralow loss and a large effective area according to claim 1, wherein a content of alkali metal ions in the core layer is 5 to 1000ppm.

3. The single-mode optical fiber with ultralow loss and a large effective area according to claim 1, wherein the alkali metal oxide is one or more of lithium oxide, sodium oxide, potassium oxide, rubidium oxide, cesium oxide, and francium oxide.

4. The single-mode optical fiber with ultralow loss and a large effective area according to claim 1, wherein an effective area of the single-mode optical fiber at a wavelength of 1550nm is 130μm$^2$.

5. The single-mode optical fiber with ultralow loss and a large effective area according to claim 1, wherein when the single-mode optical fiber is wound for one turn at a bending radius of 10mm, a macrobending loss at a wavelength of 1550nm is 0.36dB/km.

6. The single-mode optical fiber with ultralow loss and a large effective area according to claim 1, wherein a mode field diameter of the single-mode fiber at a wavelength of 1550nm is 12.8μm.

7. A single-mode optical fiber with ultralow loss and a large effective area, the bare optical fiber of the single-mode optical fiber comprises a core layer and a cladding layer in sequence from inside to outside, wherein

the core layer comprises an inner core layer (1) and an outer core layer (2) which are arranged in sequence from inside to outside; the radius $R_1$ of the inner core layer (1) is 3μm, and the relative refractive index $n_1$ of the inner core layer (1) is -0.01%; the radius $R_2$ of the outer core layer (2) is 6μm, and the relative refractive index $n_2$ of the outer core layer (2) is -0.008%; the core layer is hardly doped with germanium, and is a silica glass layer doped with fluorine and an alkali metal oxide;
the cladding layer comprises a depressed cladding layer (3) and an outer cladding layer (4) which are arranged in sequence from inside to outside; the radius $R_3$ of the depressed cladding layer (3) is 49μm, the relative refractive index $n_3$ of the depressed cladding layer (3) is -0.24%;
the radius $R_4$ of the outer cladding layer (4) is 62.5μm, and the outer cladding layer (4) is a pure silica glass layer;
the contributing refractive index of germanium in the inner core layer (1) to the inner core layer (1) is 0.06%, and the contributing refractive index of fluorine in the inner core layer (1) to the inner core layer (1) is -0.07%;
the contributing refractive index of germanium in the outer core layer (2) to the outer core layer (2) is 0.03%, and the contributing refractive index of fluorine in
the outer core layer (2) to the outer core layer (2) is -0.038%;
an attenuation coefficient of the single-mode optical fiber at a wavelength of 1550nm is 0.155dB/km.

8. The single-mode optical fiber with ultralow loss and a large effective area according to claim 7, wherein a content of alkali metal ions in the core layer is 5 to 1000ppm.

9. The single-mode optical fiber with ultralow loss and a large effective area according to claim 7, wherein the alkali metal oxide is one or more of lithium oxide, sodium oxide, potassium oxide, rubidium oxide, cesium oxide, and francium oxide.

10. The single-mode optical fiber with ultralow loss and a large effective area according to claim 7, wherein an effective area of the single-mode optical fiber at a wavelength of 1550nm is 133μm$^2$.

**11.** The single-mode optical fiber with ultralow loss and a large effective area according to claim 7, wherein when the single-mode optical fiber is wound for one turn at a bending radius of 10mm, a macrobending loss at a wavelength of 1550nm is 0.38dB/km.

**12.** The single-mode optical fiber with ultralow loss and a large effective area according to claim 7, wherein a mode field diameter of the single-mode fiber at a wavelength of 1550nm is 13$\mu$m.

**13.** A method for manufacturing a single-mode optical fiber with ultralow loss and a large effective area according to any one of claims 1 to 12, wherein the method comprises the following steps: using a plasma chemical vapor deposition method to deposit and manufacture an optical fiber preform on a quartz reaction tube, using $SiCl_4$, $GeCl_4$, and $C_2F_6$ as raw materials for the optical fiber preform, preparing a designed profile of the optical fiber preform through changing the gas flow rate and ratio, as well as the moving speed of the reaction zone and the number of deposition during the production process, then adding a certain concentration of the alkali metal oxide during the preform formation process, at the same time, adding oxygen for reaction to remove water, finally melting the preform at a high temperature to obtain an alkali metal-doped optical fiber preform, and then subjecting the alkali metal-doped optical fiber preform to a drawing process.

**14.** The method for manufacturing the single-mode optical fiber with ultralow loss and a large effective area according to claim 13, wherein the temperature for drawing the optical fiber preform is 1800 to 2000°C.

**Patentansprüche**

**1.** Optische Monomodefaser mit ultraniedrigem Verlust und einer großen Wirkfläche, wobei die bloße optische Faser der optischen Monomodefaser eine Kernschicht und eine Mantelschicht aufeinanderfolgend von der Innen- zur Außenseite aufweist,

wobei die Kernschicht eine innere Kernschicht (1) und eine äußere Kernschicht (2) aufweist, die aufeinanderfolgend von der Innen- zur Außenseite angeordnet sind; der Radius $R_1$ der inneren Kernschicht (1) 2,7 $\mu$m ist, und der relative Brechungsindex $n_1$ der inneren Kernschicht (1) -0,02 % ist; der Radius $R_2$ der äußeren Kern-schicht (2) 5,7 $\mu$m ist, und der relative Brechungsindex $n_2$ der äußeren Kernschicht (2) -0,006 % ist, die Kernschicht kaum mit Germanium dotiert ist und eine Quarzglas-Schicht ist, die mit Fluor und einem Alkalimetalloxid dotiert ist;
wobei die Mantelschicht eine tiefer angelegte Mantelschicht (3) und eine äußere Mantelschicht (4) aufweist, die aufeinanderfolgend von der Innen- zur Außenseite angeordnet sind; wobei der Radius $R_3$ der tiefer ange-legten Mantelschicht (3) 47 $\mu$m ist, der relative Brechungsindex $n_3$ der tiefer angelegten Mantelschicht (3) -0,235 % ist; der Radius $R_4$ der äußeren Mantelschicht (4) 62,5 $\mu$m ist, und die äußere Mantelschicht (4) eine reine Quarzglas-Schicht ist;
wobei der mittragende Brechungsindex von Germanium in der inneren Kernschicht (1) zu der inneren Kernschicht (1) 0,02 % ist, und der mittragende Brechungsindex von Fluor in der inneren Kernschicht (1) zu der inneren Kernschicht (1) -0,04 % ist;
wobei der mittragende Brechungsindex von Germanium in der äußeren Kernschicht (2) zu der äußeren Kernschicht (2) 0,04 % ist,
und der mittragende Brechungsindex von Fluor in der äußeren Kernschicht (2) zu der äußeren Kernschicht (2) -0,046 % ist;
wobei ein Dämpfungskoeffizient der optischen Monomodefaser bei einer Wellenlänge von 1550 nm 0,158 dB/km ist.

**2.** Optische Monomodefaser mit ultraniedrigem Verlust und einer großen Wirkfläche nach Anspruch 1, wobei ein Gehalt von Alkalimetall-Ionen in der Kernschicht 5 bis 1000 ppm ist.

**3.** Optische Monomodefaser mit ultraniedrigem Verlust und einer großen Wirkfläche nach Anspruch 1, wobei das Alkalimetalloxid eines oder mehrere von einem Lithiumoxid, Natriumoxid, Kaliumoxid, Rubidiumoxid, Cäsiumoxid und Franciumoxid ist.

**4.** Optische Monomodefaser mit ultraniedrigem Verlust und einer großen Wirkfläche nach Anspruch 1, wobei eine Wirkfläche der optischen Monomodefaser bei einer Wellenlänge von 1550 nm 130 $\mu$m$^2$ ist.

**5.** Optische Monomodefaser mit ultraniedrigem Verlust und einer großen Wirkfläche nach Anspruch 1, wobei, wenn die optische Monomodefaser für eine Windung bei einem Biegeradius von 10 mm gewickelt ist, ein Makrobiegungsverlust bei einer Wellenlänge von 1550 nm 0,36 dB/km ist.

**6.** Optische Monomodefaser mit ultraniedrigem Verlust und einer großen Wirkfläche nach Anspruch 1, wobei ein Modenfelddurchmesser der optischen Monomodefaser bei einer Wellenlänge von 1550 nm 12,8 $\mu$m ist.

**7.** Optische Monomodefaser mit ultraniedrigem Verlust und einer großen Wirkfläche, wobei die bloße optische Faser der optischen Monomodefaser eine Kernschicht und eine Mantelschicht aufeinanderfolgend von der Innen- zur Außenseite aufweist,

wobei die Kernschicht eine innere Kernschicht (1) und eine äußere Kernschicht (2) aufweist, die aufeinanderfolgend von der Innen- zur Außenseite angeordnet sind; der Radius $R_1$ der inneren Kernschicht (1) 3 $\mu$m ist, und der relative Brechungsindex $n_1$ der inneren Kernschicht (1) -0,01% ist; der Radius $R_2$ der äußeren Kernschicht (2) 6 $\mu$m ist, und der relative Brechungsindex $n_2$ der äußeren Kernschicht (2) -0,008 % ist; die Kernschicht kaum mit Germanium dotiert ist und eine Quarzglas-Schicht ist, die mit Fluor und einem Alkalimetalloxid dotiert ist;
wobei die Mantelschicht eine tiefer angelegte Mantelschicht (3) und eine äußere Mantelschicht (4) aufweist, die aufeinanderfolgend von der Innen- zur Außenseite angeordnet sind; wobei der Radius $R_3$ der tiefer angelegten Mantelschicht (3) 49 $\mu$m ist, der relative Brechungsindex $n_3$ der tiefer angelegten Mantelschicht (3) -0,24 % ist; der Radius $R_4$ der äußeren Mantelschicht (4) 62,5 $\mu$m ist und die äußere Mantelschicht (4) eine reine Quarzglas-Schicht ist;
wobei der mittragende Brechungsindex von Germanium in der inneren Kernschicht (1) zu der inneren Kernschicht (1) 0,06 % ist, und der mittragende Brechungsindex von Fluor in der inneren Kernschicht (1) zu der inneren Kernschicht (1) -0,07 % ist;
wobei der mittragende Brechungsindex von Germanium in der äußeren Kernschicht (2) zu der äußeren Kernschicht (2) 0,03 % ist; und
der mittragende Brechungsindex von Fluor in der äußeren Kernschicht (2) zu der äußeren Kernschicht (2) -0,038 % ist;
wobei ein Dämpfungskoeffizient der optischen Monomodefaser bei einer Wellenlänge von 1550 nm 0,155 dB/km ist.

**8.** Optische Monomodefaser mit ultraniedrigem Verlust und großer Wirkfläche nach Anspruch 7, wobei ein Gehalt von Alkalimetall-Ionen in der Kernschicht 5 bis 1000 ppm ist.

**9.** Optische Monomodefaser mit ultraniedrigem Verlust und einer großen Wirkfläche nach Anspruch 1, wobei das Alkalimetalloxid eines oder mehrere von einem Lithiumoxid, Natriumoxid, Kaliumoxid, Rubidiumoxid, Cäsiumoxid und Franciumoxid ist.

**10.** Optische Monomodefaser mit ultraniedrigem Verlust und einer großen Wirkfläche nach Anspruch 7, wobei eine Wirkfläche der optischen Monomodefaser bei einer Wellenlänge von 1550 nm 133 $\mu$m$^2$ ist.

**11.** Optische Monomodefaser mit ultraniedrigem Verlust und einer großen Wirkfläche nach Anspruch 7, wobei, wenn die optische Monomodefaser für eine Windung bei einem Biegeradius von 10 mm gewickelt ist, ein Makrobiegungsverlust bei einer Wellenlänge von 1550 nm 0,36 dB/km ist.

**12.** Optische Monomodefaser mit ultraniedrigem Verlust und einer großen Wirkfläche nach Anspruch 7, wobei ein Modenfelddurchmesser der optischen Monomodefaser bei einer Wellenlänge von 1550 nm 13 $\mu$m ist.

**13.** Verfahren zur Herstellung einer optischen Monomodefaser mit ultraniedrigem Verlust und einer großen Wirkfläche nach einem der Ansprüche 1 bis 12, wobei das Verfahren die folgenden Schritte aufweist: Verwenden eines plasmaunterstützten chemischen Gasphasenabscheidungsverfahrens zum Abscheiden und Herstellen einer optischen Faservorform auf einer Quarzreaktionsröhre unter Verwendung von $SiCl_4$, $GeCl_4$ und $C_2F_6$ als Rohmaterialien für die optische Faservorform, Vorbereiten eines entworfenen Profils der optischen Faservorform durch Verändern der Gasflussrate und des Gasflussverhältnisses sowie der Bewegungsgeschwindigkeit der Reaktionszone und der Anzahl der Abscheidungen während des Herstellungsvorgangs, anschließendes Hinzufügen einer bestimmten Konzentration des Alkalimetalloxids während des Vorformbildungsvorgangs, zur gleichen Zeit, Hinzufügen von Sauerstoff für eine Reaktion zum Entfernen von Wasser, abschließendes Schmelzen der Vorform bei einer hohen Temperatur zum Erhalten einer alkalimetalldotierten optischen Faservorform, wobei anschließend die alkalimetalldotierte optische Faservorform einem Ziehvorgang unterzogen wird.

14. Verfahren zur Herstellung der optischen Monomodefaser mit ultraniedrigem Verlust und einer großen Wirkfläche nach Anspruch 13, wobei die Temperatur zum Ziehen der optischen Faservorform 1800 bis 2000 °C ist.


**Revendications**

1. Fibre optique monomode à très faible perte et à grande surface utile, la fibre optique nue de la fibre optique monomode comprenant une couche de coeur et une couche de gaine successives de l'intérieur vers l'extérieur, dans laquelle

   la couche de coeur comprend une couche de coeur interne (1) et une couche de coeur externe (2) qui sont disposées successivement de l'intérieur vers l'extérieur ;
   le rayon $R_1$ de la couche de coeur interne (1) est de 2,7 $\mu$m, et l'indice de réfraction relatif $n_1$ de la couche de coeur interne (1) est de -0,02 % ;
   le rayon $R_2$ de la couche de coeur externe (2) est de 5,7 $\mu$m, et l'indice de réfraction relatif $n_2$ de la couche de coeur externe (2) est de -0,006 % ;
   la couche de coeur est à peine dopée au germanium et est une couche de verre de silice dopée au fluor et à un oxyde de métal alcalin ;
   la couche de gaine comprend une couche de gaine emprisonnée (3) et une couche de gaine externe (4) qui sont disposées successivement de l'intérieur vers l'extérieur ;
   le rayon $R_3$ de la couche de gaine emprisonnée (3) est de 47 $\mu$m, l'indice de réfraction relatif $n_3$ de la couche de gaine emprisonnée (3) est de -0,235 %, le rayon $R_4$ de la couche de gaine externe (4) est de 62,5 $\mu$m, et la couche de gaine externe (4) est une couche de verre de silice pure ;
   l'indice de réfraction du germanium dans la couche de coeur interne (1) contribuant à la couche de coeur interne (1) est de 0,02 %, et l'indice de réfraction du fluor dans la couche de coeur interne (1) contribuant à la couche de coeur interne (1) est de -0,04 % ;
   l'indice de réfraction du germanium dans la couche de coeur externe (2) contribuant à la couche de coeur externe (2) est de 0,04 %,
   et l'indice de réfraction du fluor dans la couche de coeur externe (2) contribuant à la couche de coeur externe (2) est de -0,046 %,
   un coefficient d'atténuation de la fibre optique monomode à une longueur d'onde de 1550 nm est de 0,158 dB/km.

2. Fibre optique monomode à très faible perte et à grande surface utile selon la revendication 1, dans laquelle la teneur en ions de métal alcalin dans la couche de coeur est comprise entre 5 et 1000 ppm.

3. Fibre optique monomode à très faible perte et à grande surface utile selon la revendication 1, dans laquelle l'oxyde de métal alcalin est un ou plusieurs des oxydes de lithium, de sodium, de potassium, de rubidium, de césium et de francium.

4. Fibre optique monomode à très faible perte et à grande surface utile selon la revendication 1, dans laquelle une surface utile de la fibre optique monomode à une longueur d'onde de 1550 nm est de 130 $\mu$m$^2$.

5. Fibre optique monomode à très faible perte et à grande surface utile selon la revendication 1, dans laquelle, lorsque la fibre optique monomode est enroulée pour un tour à un rayon de courbure de 10 mm, une perte de macrocourbure à une longueur d'onde de 1550 nm est de 0,36 dB/km.

6. Fibre optique monomode à très faible perte et à grande surface utile selon la revendication 1, dans laquelle un diamètre de champ de mode de la fibre monomode à une longueur d'onde de 1550 nm est de 12,8 $\mu$m.

7. Fibre optique monomode à très faible perte et à grande surface utile, la fibre optique nue de la fibre optique monomode comprenant une couche de coeur et une couche de gaine successivement de l'intérieur vers l'extérieur, dans laquelle

   la couche de coeur comprend une couche de coeur interne (1) et une couche de coeur externe (2) qui sont disposées successivement de l'intérieur vers l'extérieur ;
   le rayon $R_1$ de la couche de coeur interne (1) est de 3 $\mu$m, et l'indice de réfraction relatif $n_1$ de la couche de coeur interne (1) est de -0,01 % ;

le rayon $R_2$ de la couche de coeur externe (2) est de 6 $\mu$m, et l'indice de réfraction relatif $n_2$ de la couche de coeur externe (2) est de -0,008 % ;

la couche de coeur est à peine dopée au germanium et est une couche de verre de silice dopée au fluor et à un oxyde de métal alcalin ;

la couche de gaine comprend une couche de gaine emprisonnée (3) et une couche de gaine externe (4) qui sont disposées successivement de l'intérieur vers l'extérieur ;

le rayon $R_3$ de la couche de gaine emprisonnée (3) est de 49 $\mu$m, l'indice de réfraction relatif $n_3$ de la couche de gaine emprisonnée (3) est de -0,24 % ; le rayon $R_4$ de la couche de gaine externe (4) est de 62,5 $\mu$m, et la couche de gaine externe (4) est une couche de verre de silice pure ;

l'indice de réfraction du germanium dans la couche de coeur interne (1) contribuant à la couche de coeur interne (1) est de 0,06 %, et l'indice de réfraction du fluor dans la couche de coeur interne (1) contribuant à la couche de coeur interne (1) est de -0,07 % ;

l'indice de réfraction du germanium dans la couche de coeur externe (2) contribuant à la couche de coeur externe (2) est de 0,03 % ;

et l'indice de réfraction du fluor dans la couche de coeur externe (2) contribuant à la couche de coeur externe (2) est de -0,038 % ;

un coefficient d'atténuation de la fibre optique monomode à une longueur d'onde de 1550 nm est de 0,155 dB/km.

8. Fibre optique monomode à très faible perte et à grande surface utile selon la revendication 7, dans laquelle la teneur en ions de métal alcalin dans la couche de coeur est comprise entre 5 et 1000 ppm.

9. Fibre optique monomode à très faible perte et à grande surface utile selon la revendication 7, dans laquelle l'oxyde de métal alcalin est un ou plusieurs des oxydes de lithium, de sodium, de potassium, de rubidium, de césium et de francium.

10. Fibre optique monomode à très faible perte et à grande surface utile selon la revendication 7, dans laquelle une surface utile de la fibre optique monomode à une longueur d'onde de 1550 nm est de 133 $\mu$m$^2$

11. Fibre optique monomode à très faible perte et à grande surface utile selon la revendication 7, dans laquelle, lorsque la fibre optique monomode est enroulée pour un tour à un rayon de courbure de 10 mm, une perte de macrocourbure à une longueur d'onde de 1550 nm est de 0,38 dB/km.

12. Fibre optique monomode à très faible perte et à grande surface utile selon la revendication 7, dans laquelle un diamètre de champ de mode de la fibre optique monomode à une longueur d'onde de 1550 nm est de 13 $\mu$m.

13. Procédé de fabrication d'une fibre optique monomode à très faible perte et à grande surface utile selon l'une des revendications 1 à 12, dans lequel le procédé comprend les étapes suivantes consistant à :

utiliser une méthode de dépôt chimique en phase vapeur par plasma pour déposer et fabriquer une préforme de fibre optique sur un tube de réaction en quartz, en utilisant du $SiCl_4$, $GeCl_4$ et $C_2F_6$ comme matières premières pour la préforme de fibre optique,

créer un profil déterminé de la préforme de fibre optique en changeant le débit de gaz et le rapport ainsi que la vitesse de mouvement de la zone de réaction et le nombre de dépôts au cours du processus de production, puis, ajouter une certaine concentration d'oxyde de métal alcalin pendant le processus de formation de la préforme, tout en ajoutant simultanément de l'oxygène pour la réaction afin d'éliminer l'eau,

puis, faire fondre la préforme à haute température pour obtenir une préforme de fibre optique dopée au métal alcalin, et

enfin, soumettre la préforme de fibre optique dopée au métal alcalin à un processus d'étirage.

14. Procédé de fabrication de la fibre optique monomode à très faible perte et à grande surface utile selon la revendication 13, dans lequel la température d'étirage de la préforme de fibre optique est comprise entre 1800 et 2000 °C.

Fig. 1

Fig. 2

**REFERENCES CITED IN THE DESCRIPTION**

**Patent documents cited in the description**

- CN 104459876 A
- CN 107179579 A

- CN 106125192 A